# EUROPÄISCHE PATENTANMELDUNG

(11) **EP 2 279 989 A2**
(43) Veröffentlichungstag der Anmeldung: **02.02.2011**
(21) Anmeldenummer: 10170641.4
(22) Anmeldetag: 23.07.2010
(51) Int. Cl.: C05C 1/02, C05C 9/00, C05F 3/02, C05B 7/00, C05G 5/00, C05G 3/00

(54) **Langzeitdünger auf Basis von vorwiegend pflanzlichem Material mit Harnstoff**

(30) Priorität: 31.07.2009 DE 102009035616
(71) Anmelder: Moser, Josef, 85435 Erding (DE)
(72) Erfinder: Moser, Josef, 85435 Erding (DE)
(74) Vertreter: Winter, Brandl, Fürniss, Hübner, Röss, Kaiser, Polte - Partnerschaft

(57) **Zusammenfassung**

Die vorliegende Erfindung betrifft ein Verfahren zur Herstellung eines stickstoffhaltigen, insbesondere harnstoffhaltigen, Langzeitdüngers aus vorwiegend pflanzlichem Ausgangsmaterial, welcher in der Lage ist, die stickstoffhaltige Verbindung, insbesondere den Harnstoff, bis zu sechs Monate lang freizusetzen.

## Beschreibung

Die vorliegende Erfindung betrifft ein Verfahren zur Herstellung eines harnstoffhaltigen Langzeitdüngers auf Basis von vorwiegend pflanzlichem Material gemäß Patentanspruch 1, eine Langzeitdüngermasse gemäß Patentanspruch 18 sowie eine Verwendung der Masse zur Langzeitfreisetzung von Harnstoff.

Die Herstellung von biologisch abbaubaren Pellets auf Basis von pflanzlichem Material - wenn auch zu anderen Zwecken - ist beispielsweise aus der DE 44 24 403 B4 bekannt.

Dort wird eine Bio-Masse auf Basis von pflanzlichem Material beschrieben, welche zu biologisch abbaubaren Gegenständen, wie Verpackungsmaterialien, Bremsbelägen, Armaturenbretter usw. verarbeitet werden kann.

Darüber hinaus ist Harnstoff als N-haltiges Düngemittel seit vielen Jahren bekannt.

CN1900025A und CN1900024A beschreiben ein Herstellungsverfahren eines harnstoffhaltigen Düngmittels mit folgenden Schritten: anaerobes Fermentieren der pflanzlichen und tierischen Abfallprodukte; und Zugeben von Harnstoff zu dem durch die Fermentation anfallenden festen Teil.

KR20020087653 beschreibt ein Herstellungsverfahren eines harnstoffhaltigen Düngmittels mit folgenden Schritten: anaerobes Fermentieren der pflanzlichen und tierischen Abfallprodukte; Zugeben von Harnstoff zu dem durch die Fermentation anfallenden festen Teil; und Pelletieren der Mischung.

AU 10 401/70 beschreibt ein Herstellungsverfahren eines Düngmittels mit folgenden Schritten: Trocknen und Zerkleinern des organischen Abfallmaterials; und Zugeben des Harnstoff-Formaldehydharzes zu dem zerkleinerten organischen Abfallmaterial.

Das Zugeben eines Bioklebers zum Düngmittel ist im Stand der Technik nicht offenbart.

Problematisch ist Harnstoff jedoch mit seiner extrem guten Wasserlöslichkeit bei neutralem pH von 1080g/l bei 20°C und sogar 7000g/l bei 100°C. Diese beträchtliche Wasserlöslichkeit hat den Vorteil, dass harnstoffhaltige Düngemittel den zu düngenden Pflanzen Harnstoff unmittelbar in gelöster Form als wirksame N-Quelle zur Verfügung stellen und den Pflanzen eine leichte Resorption ermöglichen.

Nachteilig an festen Harnstoff-Präparationen aller Art ist es jedoch, dass diese schnelle Verfügbarkeit durch ein schnelles Freisetzen des Harnstoffs aus den Präparationen innerhalb von Stunden bis Tagen eintritt.

Wird beispielsweise ein harnstoffhaltiges Granulat auf den Boden ausgebracht, so wird nach dem ersten Regen der Harnstoff innerhalb kürzester Zeit - meist zwischen 24 und 48h der größte Anteil, d.h. über 80% freigesetzt, steht den Pflanzen dann kurz zur Verfügung und versickert aufgrund der hohen Löslichkeit des Harnstoffs mit dem Regenwasser im Boden, um letzten Endes im Grundwasser anzugelangen. Ferner dringt Harnstoff hierdurch auch in die Trinkwasserreservoirs ein und muss teuer und aufwendig wieder durch Trinkwasseraufbereitung entfernt werden. Hierdurch wird Harnstoff in Wassersysteme wie Bäche, Flüsse und Seen eingetragen, was zur aquatischen Überdüngung führt, bei welcher zunächst eine explosionsartige Vermehrung von einzelligen und mehrzelligen Algen einsetzt welche schlussendlich durch Aufnahme von Sauerstoff in der Dunkelphase den Gewässern praktisch sämtlichen Sauerstoff entziehen. Als Folge hiervon sterben niedere und höhere Organismen wie Fische ab, die die Gewässer zusätzlich belasten und es setzen anaerobe Prozesse ein, so dass die Gewässer vollständig umkippen und meist nur noch durch drastische, aufwendige und teure Maßnahmen wie beispielsweise Tiefenbelüftung zu retten sind.

Ausgehend von diesem Stand der Technik ist es Aufgabe der vorliegenden Erfindung, ein Verfahren sowie ein Produkt zur Verfügung zu stellen, welches, ohne weitere chemische Zusatzstoffe wie Komplexierungsmittel, einen ökologisch verträglichen stickstoffhaltigen, insbesondere harnstoffhaltigen, Langzeitdünger zur Verfügung zu stellen.

Die Lösung dieser Aufgabe erfolgt verfahrenstechnisch durch die Merkmale der Patentansprüche 1 und 2, in Bezug auf einen Langzeitdünger durch die Merkmale des Patentanspruchs 13 und bezüglich einer Verwendung durch die Merkmale des Anspruchs 16.

Insbesondere betrifft die vorliegende Erfindung ein Verfahren zur Herstellung eines stickstoffhaltigen Langzeitdüngers aus vorwiegend pflanzlichem Ausgangsmaterial mit folgenden Schritten:
a. Zerkleinern des Ausgangsmaterials;
b. wenigstens überwiegend anaerobes Fermentieren des zerkleinerten gegebenenfalls angefeuchteten Materials,
c. Homogenisieren des fermentierten Materials, um eine fermentierte Masse zu erhalten;
d. Umhüllen von Portionen aus wenigstens einem stickstoffhaltigen chemischen Material, das ausgewählt wird aus der Gruppe bestehend aus: Harnstoff; Ammoniumnitrat; Ammoniumphosphat und Guano mit der Masse.

Eine bevorzugte Alternative der vorliegenden Erfindung ist ein Verfahren zur Herstellung eines harnstoffhaltigen Langzeitdüngers aus vorwiegend pflanzlichem Ausgangsmaterial mit folgenden Schritten:
e. Zerkleinern des Ausgangsmaterials;
f. wenigstens überwiegend anaerobes Fermentieren des zerkleinerten gegebenenfalls angefeuchteten Materials,
g. Homogenisieren des fermentierten Materials, um eine fermentierte pastöse Masse zu erhalten;
h. Zugeben von Harnstoff zu der Masse;
i. Zugeben eines Bioklebers, der vorzugsweise auf Basis von Getreidemehl, Quark oder Harz oder einer Mischung davon hergestellt wird, zu der Masse; und
j. Portionieren der Masse.

Das Fermentationsprodukt aus den Schritten b und f enthält nach wie vor alle Spurenelemente die bereits in den Pflanzenbestandteilen enthalten waren. Darüber hinaus gehen nur geringe Mengen an Stickstoff durch Ammoniak und molekularem Stickstoff im Biogas verloren. Der Großteil des Stickstoffs verbleibt im Fermentationsprodukt in der Form von organisch gebundenem Stickstoff in den abgestorbenen Methanbakterien. Dieser wird im Boden langsam mineralisiert, so dass eine vorteilhafte Langzeitdüngerwirkung erzielt wird.

Durch das Zugeben von Harnstoff in Schritt h wird ein wirksamer Stickstoffträger mit einem Pflanzenprodukt, welches auch gemäß DE 44 24 403 B4 mit "Bioplast" bezeichnet wird, kombiniert. Beim experimentellen Freilandeinsatz zur Düngung hat sich überraschend herausgestellt, daß der Harnstoff nicht - wie erwartet - innerhalb von 48 h zu praktisch 80% freigesetzt wird, sondern dass der Freisetzungszeitraum herstellungsspezifisch bestimmt werden und damit die Verzögerung der sukzessiven Harnstoffabgabe auf über 12 Monate betragen kann, wobei in Einzelversuchen mit Salatpflanzen dieser Zeitraum sogar bis zu 36 Monaten beträgt.

Damit steht erstmals ein stickstoffhaltiger, insbesondere harnstoffhaltiger, Langzeitdünger zur Verfügung, der die Vorteile des zusätzlichen Stickstoffeintrags mit einer rein biologischen Düngung verbindet, ohne die eingangs beschriebenen ökologisch bedenklichen gewässerbelastenden Nebenwirkungen aufzuweisen.

Für den Fall, dass konventionelle Düngesubstanzen, beispielsweise Harnstoff, Ammoniumnitrat, Ammoniumophosphat, Guano oder ähnliches nach dem erfindungsgemäßen Verfahren mit der fermentierten Masse, also mit dem "Bioplast" gemäß DE 44 24 403 B4 umhüllt werden, treten dieselben vorteilhaften Wirkungen auf wie für die Ausführungsform, bei welcher die fermentierte Pflanzen-Masse mit dem Harnstoff als stickstoffhaltigem chemischen Material versetzt wird. Auch bei einem Langzeitdünger in dieser Form, bei welcher etwa Presspellets oder ein Granulat aus stickstoffhaltigem chemischen Material mit der homogenisierten fermentierten Masse umhüllt werden, entsteht ein Langzeitdünger nach Art einer pharmazeutischen Retardformulierung, bei welchem das zum Teil hoch wasserlösliche stickstoffhaltige Material aus dem erfindungsgemäßen Langzeitdünger nur langsam abgegeben und somit freigesetzt wird. Diese Langzeitfreisetzungswirkung kann sich je nach Umweltbedingungen bis zu mehren Jahren erstrecken, während derer der Dünger noch aktiv ist.

Ohne hieran gebunden zu sein, scheint sich eine Bioplast-Matrix auszubilden, welche den Harnstoff sowie die weiteren stickstoffhaltigen chemischen Materialien stark zurückhält, so dass sie nur in geringen Maßen - eben nach Art einer pharmazeutischen Retardformulierung - abgegeben werden und von den zu düngenden Pflanzen unmittelbar und bedarfsgerecht aufgenommen werden.

Das pflanzliche Ausgangsmaterial wird vorzugsweise ausgewählt aus der Gruppe bestehend aus: pflanzlichen Materialien, insbesondere faserhaltige Materialien, vorzugsweise Zweige, Blätter, Nadeln, Wurzeln; Früchte; Stengel; Schalen; Schoten; Knollen; Blüten; Rinde; Holz; Mark; Gräser; Getreide; Unkraut; Fasern, und tierischen Materialien, insbesondere tierisches Material, welches sich noch an/in dem pflanzlichen Material befindet, sowie Tierepithelien, insbesondere Haare, Federn; Horn; sowie Mischungen aus diesen.

Das pflanzliche Ausgangsmaterial kann zusätzlich noch mineralische Bestandteile, insbesondere Erde, Ton, Lehm, Sand, Spurenelemente enthalten.

Dabei werden die pflanzlichen Materialien bevorzugt ausgewählt aus der Gruppe bestehend aus: Gräsern, insbesondere Getreide, Weizen, Gerste, Roggen, Hirse, Hafer, Mais, Reis; immergrünen Hartlaubgewächsen, insbesondere Akazien, Eukalyptus, Kiefer; Aloen; Euphorbia; Zuckerbüsche (*Protea*), insbesondere Silberbaumgewächse (Proteaceae), insbesondere Königsprotea (*Protea cynaroides*); Affenbrotbäume; Hartholzgewächse; Zuckerrohr.

Bevorzugt wird das Zerkleinern durch Häckseln, Zermahlen und/oder Zerreiben ausgeführt.

Die Fermentation des pflanzlichen Materials geschieht in geeigneter Weise durch eine wenigstens überwiegend anaerobe Fermentation, durch Vergären, insbesondere Milchsäuregärung, Silieren, Kompostieren oder andere biologische Umsetzungen unter Beteiligung von Mischbiozönosen.

Die wenigstens überwiegend durchgeführte anaerobe Fermentation kann z.B. durch Verminderung des Sauerstoffpartialdruckes und/oder Sauerstoffentzug und/oder Beschickung mit einem nicht sauerstoffhaltigen Gas bzw. Gasgemisch, insbesondere Inertgas, vorzugsweise Stickstoff, durchgeführt werden, wobei erhöhter Druck und/oder erhöhte Temperatur bevorzugt sind.

Der anaerobe Fermentationsschritt wird in der Regel ca. 14 Tage lang durchgeführt, er kann - in Abhängigkeit vom eingesetzten Material - jedoch auch länger durchgeführt werden.

Eine bevorzugte Ausführungsform der vorliegenden Erfindung ist es, nach der wenigstens überwiegend anaeroben Fermentation eine vorwiegend aerobe Nachbehandlung durchzuführen, welche in der Regel mindestens ca. 3 Monate lang durchgeführt wird.

Der Homogenisationsschritt kann zum Erhalten einer form- und/oder portionierbaren Masse bis zu ca. 10 Mal wiederholt werden, wobei die Masse bei Bedarf eingedickt wird. Das Eindicken kann entweder durch die Zugabe von in der vorliegenden Beschreibung genannten Zuschlagstoffen oder aber durch Wasserentzug erfolgen.

Es ist bevorzugt, die homogenisierte Masse durch Pelletieren zu portionieren.

Die Portionierung des stickstoffhaltigen chemischen Materials kann ebenfalls durch Pelletieren oder Granulieren erfolgen.

Vorzugsweise wird der aus dem eingedickten Fermentationsprodukt hergestellte harnstoffhaltige Langzeitdünger auf einen Restfeuchtegehalt von ca. 8-15% eingestellt.

Der homogenisierten Masse können vor ihrer Weiterverarbeitung Zusatzstoffe zugesetzt werden, welche ausgewählt sind aus der Gruppe bestehend aus: mineralischen Füllstoffen, insbesondere Steinstaub, Thomasmehl, Tonmehlen; schwefelhaltige Mineralien, insbesondere Gips; phosphorhaltige Mineralien; Guano; Schafwollstaub, pflanzlichen Füllstoffen, wie Sägemehl, Holzwolle Holzspänen, Holzstaub, Brennesseln, nachwachsenden Rohstoffen, Silagegut, Komposten, Altbrot, Holzasche, Faserstoffen, insbesondere Flachs, Bananenfaser, Kokos, Sisal, Baumfasern, Torf; Wachsen; Stärke; Ölen; Harzen; Zucker; Latex-Stoffen; sowie deren Mischungen.

Bevorzugt kann das Eindicken des Fermentationsprodukts durch Zugabe mindestens eines solchen Zusatzstoffes erfolgen.

Zum Eindicken kann auch ein sogenannter Biokleber zugegeben werden, der auf Basis von Getreidemehl, Protein, insbesondere Quark oder Harz oder einer Mischung davon hergestellt ist.

Der Langzeitdünger kommt bevorzugt in Form von festen, streufähigen Pellets oder als Granulat zum Einsatz. Zusätzlich zu den Zusatzstoffen kann auch ein Biokleber zugegeben werden, um den Pellets eine ausreichende Festigkeit zu verleihen. Derartige Biokleber werden beispielsweise vom Erfinder der vorliegenden Erfindung in dem deutschen Patent DE 42 11 013 beschrieben. Somit wird der Biokleber vorzugsweise auf Basis von Getreidemehl, Quark oder Harz oder einer Mischung davon hergestellt.

Die Menge des zugegebenen Bioklebers beeinflusst die Langzeitwirkung des Düngers. Vorzugsweise wird der Biokleber in einer Menge von 1-10 Gew.-% des Fermentationsprodukts zugegeben, je nach gewünschtem Zeitraum der Harnstoffabgabe.

Zum Portionieren des eingedickten Fermentationsprodukts kann jede dazu geeignete Vorrichtung verwendet werden. So ist es beispielsweise möglich, eine Pelletierpresse zu verwenden. Auch ist es möglich, einen geeigneten Extruder, z.B. einen solchen mit einem Lochblech, einzusetzen.

Weitere Vorteile und Merkmale der vorliegenden Erfindung ergeben sich aufgrund der Beschreibung der nachfolgenden Ausführungsbeispiele sowie anhand der Zeichnung.

Es zeigt:

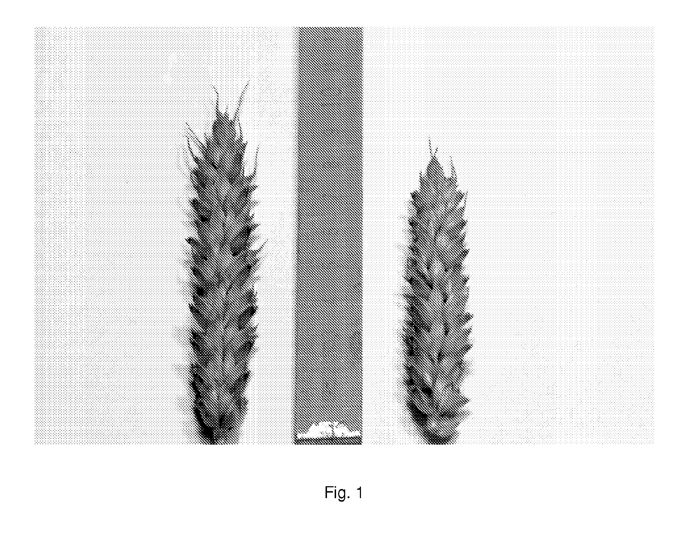

Fig. 1 eine Vergleichsaufnahme jeweils einer Ähre einer erfindungsgemäß gedüngten Weizenpflanze (größer) und einer konventionell gedüngten Weizenpflanze.

### Ausführungsbeispiel 1A

20 kg gehäckselter Mais, 10 kg gehäckselte Zweige und 10 kg Gras wurden vermischt und in einen Plastiksack gefüllt. Der Plastiksack wurde zur anaeroben Fermentation unter Anlegung von Unterdruck evakuiert und luftdicht verschlossen. Nach 14 Tagen wurde die erhaltene faserhaltige und torfartige Masse 10 mal homogenisiert. Die Ausbeute an verarbeitbarer pastöser Masse betrug ca. 20 kg.

Die pastöse Masse wurde mit Wasser auf eine solche Viskosität eingestellt, dass sich eine Konsistenz ergab, die in etwa einem gut gießbaren Pfannkuchenteig entspricht.

Auf einem Sieb wurden etwa 0,5 Kg Pellets aus kristallinem Harnstoff angeordnet, welche mittels einer Tablettenpresse aus Harnstoffpulver hergestellt wurden.

Das Sieb mit den Harnstoffpellets wurde vorsichtig in die einen Behälter mit der fermentierten Masse vollständig kurz eingetaucht und dann wieder herausgenommen und während zwei Tagen auf dem Sieb an der Luft getrocknet und dann in Säcke verpackt und gelagert.

### Ausführungsbeispiel 1B

Für andere stickstoffhaltige chemische Materialien wie Ammoniumnitrat, Ammoniumphosphat und Guano wurde wie in Beispiel 1 A verfahren, jedoch mit dem Unterschied, dass hierbei Granulate statt Presspellets aus diesen Materialien verwendet wurden. Sofern Ammoniumnitrat verwendet wurde, lag dieses wegen seiner explosiven Eigenschaften zu maximal 65 Masse-% im Gemisch mit inerten Materialien, im Beispielsfalle Ammoniumsulfat, vor, so dass kein explosiver Zerfall bei der Herstellung des erfindungsgemäßen Langzeitdüngers zu besorgen war.

### Ausführungsbeispiel 1C

20 kg gehäckselter Mais, 10 kg gehäckselte Zweige und 10 kg Gras wurden vermischt und in einen Plastiksack gefüllt. Der Plastiksack wurde zur anaeroben Fermentation unter Anlegung von Unterdruck evakuiert und luftdicht verschlossen. Nach 14 Tagen wurde die erhaltene faserhaltige und torfartige Masse 10 mal homogenisiert. Die Ausbeute an verarbeitbarer Masse betrug ca. 20 kg. Zu der Masse wurden ca. 2 Kg kristalliner Harnstoff gegeben und mit der Masse verknetet. Die Düngermasse wurde dann mit einem Schneckenextruder bei einem Druck von ca. 1400 kg/cm² durch eine Lochplatte zu Pellets gepresst. Die Pellets wurden während zwei Tagen auf Sieben an der Luft getrocknet und dann in Säcke verpackt und gelagert.

### Ausführungsbeispiel 2

20 kg gehäckselter Mais, 10 kg gehäckselte Zweige und 10 kg Gras wurden vermischt und in einen Plastiksack gefüllt. Der Plastiksack wurde zur anaeroben Fermentation unter Anlegung von Unterdruck evakuiert und luftdicht verschlossen. Nach 14 Tagen wurde die erhaltene faserhaltige und torfartige Masse 10 mal homogenisiert. Die Ausbeute an verarbeitbarer Masse betrug ca. 20 kg. Zu der Masse wurden ca. 5 Kg Harnstoff und ca. 0,5 kg Calciumsulfat als Schwefelquelle gegeben und mit der Masse verknetet. Die Düngermasse wurde dann mit einem Schneckenextruder wie in Ausführungsbeispiel 1 pelletiert, getrocknet und gelagert.

### Ausführungsbeispiel 3

20 kg gemischte Eichen-, Buchen- und Ahornblätter und 20 kg gehäckselte Zweige wurden vermischt und in eine Tonne gefüllt. Die Tonne wurde mit einem Deckel verschlossen und die in der Tonne enthaltene Luft wurde herausgedrückt, worauf die Tonne luftdicht verschlossen wurde. Nach drei Wochen langer anaerober Fermentierung wurde die Tonne geöffnet, deren Inhalt in eine gut belüftete Kiste umgeschüttet und drei Monate lang stehen gelassen um eine aerobe Nachbehandlung zu durchlaufen. Anschließend wurde die Masse fünfmal homogenisiert. Die Ausbeute an verarbeitbarer Masse betrug ca. 15 kg. Das nach der aeroben Anschluß-Fermentation zurückgebliebene Fermentationsprodukt wird durch Zugabe von 1 Gew.-% Steinmehl und 1 Gew.-% eines Bioklebers auf Basis von Weizenstärke eingedickt und mit 10 Gew.-% kristallinem Harnstoff vermengt, mittels eines Extruders wie in Beispiel 1 zu Pellets verarbeitet und bis auf einen Restfeuchtegehalt von ca. 10-25% getrocknet.

Die auf diese Weise hergestellten Langzeitdüngerpellets können nach dem Abpacken direkt in den Handel gebracht werden und lassen sich in dieser Form sowohl lange Lagern als auch gut dosieren.

### Ausführungsbeispiel 4

Bei Freilandversuchen mit dem Langzeitdünger gemäß den Ausführungsbeispielen 1 bis 3 vorliegenden Anmeldung hat sich anhand von analysierten Bodenproben herausgestellt, dass Versuchsfelder, die mit dem harnstoffhaltigen Langzeitdünger gemäß der vorliegenden Erfindung gedüngt wurden, auch nach 12 Monaten noch Harnstoff enthielten, während sich auf daneben liegenden Kontrollfeldern, welche lediglich mit kristallinem Harnstoff gedüngt wurden, 48 h nach dem ersten Regen nur noch Spuren von Harnstoff nachweisen ließen. Gleiche Pflanzen - im Beispielsfalle Weizen oder Tomaten - zeigten auf den Versuchsfeldern auch ein deutlich verbessertes Wachstum und eine ausgeprägtere Fruchtentwicklung im Vergleich mit den harnstoffgedüngten Kontrollfeldern.

### Ausführungsbeispiel 5

### Freilandversuch: Gerstenanbau

Ein 10m X 10m großes Gerstenversuchsfeld wurde von einem ca. 100m X 200m großen Gerstenfeld durch Farbmarkierungen gekennzeichnet. Es wurde zur Saatzeit eine Futtergerste der Sorte Merylin ausgebracht, im Juli geerntet und gedroschen. Mit Ausnahme 10m X 10 m großen Versuchsfeldes wurde das Gerstenfeld mit ASS (Ammonsulfatsalpeter, 26% N + 13% S)-Stickstoffdünger, 40 kg/ha N zum Saattermin erstgedüngt. Es erfolgte eine Nachdüngung mit SSA (Schwefelsaures Ammoniak, 21% N + 24% S), 80 kg/ha N. Die konventionelle chemische Düngung erfolgte nach den Empfehlungen der europäischen Landwirtschaftskammern.

Das Gerstenversuchsfeld wurde einmal bei Ansaat mit pelletiertem harnstoffhaltigen Langzeitdünger gemäß Ausführungsbeispiel 2 gedüngt, wobei ca. 300 kg/ha Langzeitdüngerpellets eingesetzt wurden. Dies entspricht einer Menge von ca. 6 bis 7 kg/ha N. Dieser Stickstoff steht den Pflanzen jedoch tatsächlich dosiert zur Verfügung und aktiviert die Mischbiozönose im Boden (das sogenannte "Bodenleben"), während die konventionellen Dünger riesige Verlustraten aufweisen, die sich im Grundwasser ansammeln und somit den Pflanzen als Nährstoffe vorenthalten werden und das Bodenleben durch hohe Salzeinträge in den Boden empfindlich stören.

Ein Vergleich zwischen den unterschiedlich gedüngten Gerstenpflanzen ergibt Folgendes:
Tausendkorngewicht konventionell gedüngte Gerste: 48,5 g
Tausendkorngewicht erfindungsgemäß (Beipiel 2) gedüngte Gerste: 56,2 g
Somit liegt das Tausendkorngewicht und damit der Gerstenertrag der erfindungsgemäß gedüngten Gerste um ca. 15, 9 % über dem Tausendkorngewicht der konventionell gedüngten Gerste.

### Ausführungsbeispiel 6

### Freilandversuch: Weizenanbau

Ein 10m X 10m großes Weizenversuchsfeld wurde von einem ca. 100m X 200m großen Weizenfeld durch Farbmarkierungen gekennzeichnet. Es wurde zur Saatzeit Weizen der Sorte "Impression" ausgebracht und im Juli 2009 Ährenproben genommen und die Felder visuell verglichen.

Konventionelle Düngung: Mit Ausnahme 10m X 10 m großen Versuchsfeldes wurde das Weizenfeld mit Kalkammonsulfatsalpeter)-Stickstoffdünger (12% N + 10% Phosphor/Kali + 19% Spurenelemente, insbesondere Mg, B, S, Cu, Mn, Zn, 350 kg/ha zum Saattermin gedüngt und bei einer Wuchshöhe von ca. 20 cm erfolgte eine Nachdüngung mit ca. 150 kg/ha mit demselben Dünger. Die konventionelle Düngung erfolgte nach den Empfehlungen der europäischen Landwirtschaftskammern.

Das Weizenversuchsfeld wurde einmal bei Ansaat mit pelletiertem harnstoffhaltigen Langzeitdünger gemäß Ausführungsbeispiel 2 gedüngt, wobei ca. 300 kg/ha Langzeitdüngerpellets eingesetzt wurden. Dies entspricht einer Menge von ca. 6 bis 7 kg/ha N.

Die visuelle Inspektion des Weizenversuchsfeldes und des konventionell gedüngten Weizenvergleichsfeldes am 9. Juli 2009 ergab im Schnitt eine um ca. 2 cm größere Weizenähre im Vergleich zum konventionell gedüngten Weizen (vgl. Fig. 1). Ferner ergab sich ein deutlich wahrnehmbares "grüneres" Erscheinungsbild der erfindungsgemäß gedüngten Weizenpflanzen im Vergleich zum "gelbstichigen" Erscheinungsbild des konventionell gedüngten Weizenfeldes. Dies war darauf zurückzuführen, dass die konventionell gedüngten Weizenpflanzen - wohl durch zu hohe Stickstoffsalzbelastung - praktisch zu 100% größere, d.h. deutlich über 1 cm² große gelbe Blattareale aufwiesen, während die erfindungsgemäß gedüngten Weizenpflanzen praktisch zu 100% grüne Blätter aufwiesen.

Ferner war eine Homogenität der Ähren- und Halmgröße der erfindungsgemäß gedüngten Weizenpflanzen auffallend, welche deutlich über der Ähren- und Halmgröße der konventionell gedüngten Weizenpflanzen lag. Außerdem wiesen die konventionell gedüngten Weizenpflanzen signifikant mehr kleinwüchsigere Weizenhalme und Weizenähren auf als die erfindungsgemäßen Weizenpflanzen.

Aufgrund des deutlichen Größenunterschiedes der Ähren der erfindungsgemäß gedüngten Weizenpflanzen lässt sich auch eine deutliche Ertragssteigerung für die erfindungsgemäß gedüngten Weizenpflanzen erwarten.

Hierzu tendieren auch Stichproben der verglichenen Ährengewichte: So wogen jeweils 100 willkürlich am 9. Juli 2009 ausgewählte Ähren des Versuchsfeldes im Mittel 4,2 ± 0,6 g, während die konventionell gedüngten Weizenähren am selben Tage einen Mittelwert von lediglich 3,5 ± 0,5 g aufwiesen.

Demzufolge steht mit dem stickstoffhaltigen, insbesondere harnstoffhaltigen, Langzeitdünger der vorliegenden Erfindung ein ausgezeichnet umweltverträglicher Dünger zur Verfügung, der die Vorteile des biologischen Düngers und der des Harnstoffs miteinander verbindet, ohne mit den Nachteilen der bisherigen Harnstoffdüngung oder Stickstoffdüngung einherzugehen und der seine Praxistauglichkeit sowohl im Feldversuch mit Gersten und Weizen sowie auch bei Kleinversuchen im Gartenbau mit Salat, Karotten und Kohlrabi demonstriert hat.

## Patentansprüche

1. Verfahren zur Herstellung eines sticktoffhaltigen Langzeitdüngers aus vorwiegend pflanzlichem Ausgangsmaterial mit folgenden Schritten:
a. Zerkleinern des Ausgangsmaterials;
b. wenigstens überwiegend anaerobes Fermentieren des zerkleinerten gegebenenfalls angefeuchteten Materials,
c. Homogenisieren des fermentierten Materials, um eine fermentierte Masse zu erhalten;
d. Umhüllen von Portionen aus wenigstens einem stickstoffhaltigen chemischen Material, das ausgewählt wird aus der Gruppe bestehend aus: Harnstoff; Ammoniumnitrat; Ammoniumphosphat und Guano mit der Masse.

2. Verfahren zur Herstellung eines harnstoffhaltigen Langzeitdüngers aus vorwiegend pflanzlichem Ausgangsmaterial mit folgenden Schritten:
e. Zerkleinern des Ausgangsmaterials;
f. wenigstens überwiegend anaerobes Fermentieren des zerkleinerten gegebenenfalls angefeuchteten Materials,
g. Homogenisieren des fermentierten Materials, um eine fermentierte pastöse Masse zu erhalten;
h. Zugeben von Harnstoff zu der Masse;
i. Zugeben eines Bioklebers, der vorzugsweise auf Basis von Getreidemehl, Quark oder Harz oder einer Mischung davon hergestellt wird, zu der Masse; und
j. Portionieren der Masse.

3. Verfahren nach Anspruch 1 oder 2, **dadurch gekennzeichnet, daß** das Ausgangsmaterial ausgewählt wird aus der Gruppe bestehend aus: pflanzlichen Materialien, insbesondere faserhaltige Materialien, vorzugsweise Zweige, Blätter, Nadeln, Wurzeln; Früchte; Stengel; Schalen; Schoten; Knollen; Blüten; Rinde; Holz; Mark; Gräser; Getreide; Unkraut; Fasern, und tierischen Materialien, insbesondere tierisches Material, welches sich noch an/in dem pflanzlichen Material befindet, sowie Tierepithelien, insbesondere Haare, Federn, Horn; sowie Mischungen aus diesen;
und/oder
daß das Ausgangsmaterial zusätzlich mineralische Bestandteile, insbesondere Erde, Ton, Lehm, Sand, Eisen, Spurenelemente enthält.

4. Verfahren nach einem der Ansprüche 1 bis 3, **dadurch gekennzeichnet, daß** die pflanzlichen Materialien ausgewählt werden aus der Gruppe bestehend aus: Gräsern, insbesondere Getreide, Weizen, Gerste, Roggen, Hirse, Hafer, Mais, Reis; immergrünen Hartlaubgewächsen, insbesondere Akazien, Eukalyptus, Kiefer; Aloen; Euphorbia; Zuckerbüsche (*Protea*), insbesondere Silberbaumgewächse (Proteaceae), insbesondere Königsprotea (*Protea cynaroides*); Affenbrotbäume; Hartholzgewächse; Zuckerrohr.

5. Verfahren nach einem der Ansprüche 1 bis 4, **dadurch gekennzeichnet, daß** das Zerkleinern durch Häckseln, Zermahlen und/oder Zerreiben ausgeführt wird.

6. Verfahren nach einem der Ansprüche 1 bis 5, **dadurch gekennzeichnet, daß** die wenigstens überwiegend anaerobe Fermentation, durch Vergären, insbesondere Milchsäuregärung, Silieren, Kompostieren oder andere biologische Umsetzungen unter Beteiligung von Mischbiozönosen; durchgeführt wird.

7. Verfahren nach einem der Ansprüche 1 bis 6 **dadurch gekennzeichnet daß** die wenigstens überwiegend anaerobe Fermentation durchgeführt wird:
durch Verminderung des Sauerstoffpartialdruckes und/oder Sauerstoffentzug und/oder Beschickung mit einem nicht sauerstoffhaltigen Gas bzw. Gasgemisch, insbesondere Inertgas, vorzugsweise Stickstoff;
und/oder
bei erhöhtem Druck, insbesondere zwischen 1 und 5 bar und/oder erhöhter Temperatur, insbesondere zwischen 25 und 60°C;
und/oder ca. 14 Tage lang.

8. Verfahren nach einem der Ansprüche 1 bis 7 **dadurch gekennzeichnet, daß** nach der wenigstens überwiegend anaeroben Fermentation eine vorwiegend aerobe Nachbehandlung, insbesondere mindestens 3 Monate lang, durchgeführt wird.

9. Verfahren nach einem der Ansprüche 1 bis 8 **dadurch gekennzeichnet, daß** die homogenisierte Masse geformt wird, wobei sie vorzugsweise durch Extrudieren, Spritzen, Ziehen, Drücken, Pressen, insbesondere Strangpressen, geformt wird.

10. Verfahren nach einem der Ansprüche 1 bis 9 **dadurch gekennzeichnet, daß** der homogenisierten Masse vor ihrer Weiterverarbeitung Zusatzstoffe zugesetzt werden, welche ausgewählt sind aus der Gruppe bestehend aus: Faserstoffen, insbesondere Flachs, Bananenfaser, Kokos, Sisal, Baumfasern; Aromastoffen; mineralischen Füllstoffen; pflanzlichen Füllstoffen, vorzugsweise Sägemehl, Holzwolle; Stärke; Harzen; Zucker; Torf; Tonmehlen; schwefelhaltige Mineralien, insbeondere Gips; phosphorhaltige Mineralien; Guano; Kolloidbildner, insbesondere Gelatine und natürliche Latexstoffe; sowie deren Mischungen.

11. Verfahren nach einem der Ansprüche 1 bis 10, **dadurch gekennzeichnet, daß** der homogenisierten Masse Wasser entzogen wird.

12. Verfahren nach Anspruch 11, **dadurch gekennzeichnet, daß** die homogenisierte Masse erwärmt und/oder getrocknet wird und hierdurch verfestigt wird.

13. Langzeitdüngermasse, erhältlich nach einem Verfahren gemäß einem der Ansprüche 1-12.

14. Masse nach Anspruch 13, **dadurch gekennzeichnet, dass** sie bezogen auf das Trockengewicht 0,1 bis 30 Gew.-%, insbesondere 1 bis 15 Gew.-%, vorzugsweise 1 bis 10 Gew.-%, besonders bevorzugt 1 bis 5 Gew.-%, insbesondere ca. 2 Gew.%, Harnstoff enthält.

15. Masse nach Anspruch 13 oder 14, **dadurch gekennzeichnet, daß** ihre plastischen Eigenschaften durch Variation von Druck und/oder Temperatur sowie durch Beigabe von biologischen und/oder chemischen Zusätzen während des Herstellungsverfahrens eingestellt werden können; und/oder dass ihr Säuregehalt über die Ausgangsmaterialien sowie die Beigabe von Zusatzstoffen, vorzugsweise biologischen Klebern, gesteuert wird, wobei die Masse eine organische Säure als Konservierungsmittel umfaßt, wobei die organische Säure ausgewählt ist aus der Gruppe bestehend aus:
Essigsäure, Zitronensäure, Weinsäure, Ameisensäure, Milchsäure, Propionsäure, Benzoesäure, Sorbinsäure, Salicylsäure, sowie deren Mischungen.

16. Verwendung einer Masse nach einem der Ansprüche 13 bis 15 zur auswaschresistenten Langzeitfreisetzung von Harnstoff aus einem harnstoffhaltigen Düngemittel, wobei die Freisetzung des Harnstoffs vorzugsweise über einen Zeiraum von 6 bis 24 Monaten, insbesondere von 6 bis 12 Monaten, erfolgt.
